# EUROPÄISCHE PATENTSCHRIFT

(11) **EP 3 364 750 B1**
(45) Veröffentlichungstag und Bekanntmachung des Hinweises auf die Patenterteilung: **04.09.2019**
(21) Anmeldenummer: 16790259.2
(22) Anmeldetag: 10.10.2016
(51) Int. Cl.: A01K 1/015

(54) **EINSTREU ZUR NUTZUNG IN DER TIERHALTUNG**
LITTER FOR USE IN THE KEEPING OF LIVESTOCK
LITIÈRE DESTINÉE À ÊTRE UTILISÉE DANS UN ÉLEVAGE

(30) Priorität: 22.10.2015 EP 15003033
(43) Veröffentlichungstag der Anmeldung: 29.08.2018
(73) Patentinhaber: Catural GmbH, 68169 Mannheim (DE)
(72) Erfinder: EHRLER, Josef, Immanuel, 68169 Mannheim (DE)
(74) Vertreter: Müller-Boré & Partner Patentanwälte PartG mbB
(86) Internationale Anmeldenummer: PCT/EP2016/001676
(87) Internationale Veröffentlichungsnummer: WO 2017/067639

(56) Entgegenhaltungen:
- US-A- 5 690 052
- US-B1- 6 568 349

## Beschreibung

Die vorliegende Erfindung betrifft eine Einstreu zur Nutzung in der Tierhaltung, bestehend aus 10 bis 80 Gew.-% cellulosehaltiger Substanz, die aus mindestens einem Bestandteil der Gruppe, bestehend aus Holzmehl, Kleie, Schälkleie, Getreideschale und Getreidespelz, ausgewählt ist, 10 bis 70 Gew.-% Getreidemehl und 0,1 bis 4 Gew.-% Gelbildner, wobei der Gelbildner aus mindenstens einem Bestandteil der Gruppe bestehend aus modifizierter Stärke, Guaran, Johannisbrotmehl, Tarakernmehl, Xanthan, Gellan; Karaya,Alginat, Agar, Carrageen, Gummi arabicum, Pektin, Traganth und Celluloseether, ausgewählt ist, bezogen auf das Gesamtgewicht der Einstreu, wobei die vorstehenden Bestandteile immer jeweils 100 Gew.-% ausmachen, wobei die cellulosehaltige Substanz in Partikelform mit einer Partikelgröße von 0,2 bis 6 mm vorliegt.

Einstreu ist ein Material, das in der Tierhaltung genutzt wird, um in Stallungen und Käfigen den Boden abzudecken und die Ausscheidungen der Tiere aufzunehmen. Verwendet werden organische und mineralische Materialien, meist kostengünstige landwirtschaftliche oder industrielle Nebenprodukte oder preiswerte Rohstoffe. Zu den traditionellen und weit verbreiteten Materialien zählen Stroh, Holzspäne aus Harthölzern (wie Buchen oder Espen) und aus Weichhölzern (wie Kiefern und Zedern) sowie Sand.

Eine ökonomische Verwendung der Einstreu ist gewährleistet, wenn nach der Benetzung der Streuschicht durch die Körperflüssigkeit des Tieres diese nicht durch die gesamte Streuschicht hindurchsickert, was eine Erneuerung der gesamten Streuschicht erforderlich machen würde. Dabei kleben die von der Flüssigkeit erfassten oberen Anteile zusammen, so dass sich oben auf der Einstreuschicht Klumpen oder plattenförmige weiche Brocken bilden, die als oberste Lage mit einer kleinen Schaufel oder Gabel von der Einstreuschicht entfernt werden können, ohne dass die darunterliegenden Schichten in Mitleidenschaft gezogen werden. Die Verunreinigung durch die Körperflüssigkeit wird also auf einen kleinen Bereich beschränkt, während der Rest unversehrt bleibt. Erzielt wird diese Wirkung, indem die Einstreu selbst Klumpenbildungseigenschaften aufweist.

Besonders vorteilhaft ist eine Einstreu, die diese Klumpenbildungseigenschaft aufweist und zudem biologisch abbaubar ist, da diese ins Abwassersystem überführt werden kann.

Bekannte Einstreu, die biologisch abbaubar ist und auf nachwachsenden Rohstoffen basiert, besteht meist aus Holzmehlen und Gelbildnern. Holzmehle wirken als Trenn- und Bindemittel in einer Einstreu und Gelbildner dienen als Flüssigkeitsabsorber und Klumpenverfestiger. Durch einen hohen Gelbildneranteil kommt es jedoch zu nachteiligen Verklebungen der Einstreu an Tierhaaren, so dass die verklebte Einstreu vom Tier in den Wohnraum des Tierhalters getragen werden kann und dadurch Verschmutzungen verursacht.

DE 601 14 237 beschreibt eine biologisch abbaubare und auf nachwachsenden Rohstoffen basierende Einstreu ohne Gelbildner, die Holzmehl und Getreidemehl umfasst. Eine derartige Einstreu zeigt zwar sehr geringe Verklebungen, jedoch verhärten die Produkte nicht und weisen daher eine ungenügende Klumpenfestigkeit
US-B-6568349 offenbart eine Einstreu bestehend aus 1-50 Gew.-% Holzmehl und 50-99 Gew.-% Getreidemehl.

Angesichts dieser bekannten Einstreue ist es wünschenswert, eine biologisch abbaubare und auf nachwachsenden Rohstoffen basierende Einstreu bereitzustellen, die nicht die oben genannten, nachteiligen Eigenschaften aufweist.

Der vorliegenden Erfindung liegt daher die Aufgabe zugrunde, eine Einstreu bereitzustellen, die natürlich abbaubar ist, aus nachwachsenden Rohstoffen besteht, Klumpenbildung mit hoher Klumpenfestigkeit ermöglicht und eine geringe Verklebung an Tierhaaren verursacht.

Diese Aufgabe wird durch die in den Ansprüchen gekennzeichneten Ausführungsformen gelöst.

Die erfindungsgemäße Einstreu zur Nutzung in der Tierhaltung besteht aus 10 bis 80 Gew.-% cellulosehaltiger Substanz, die aus mindestens einem Bestandteil der Gruppe, bestehend aus Holzmehl, Kleie, Schälkleie, Getreideschale und ereespez, ausgewählt ist, 10 bis 70 Gew.-% Getreidemehl und 0,1 bis 4 Gew.-% Gelbildner, wobei der Gelbildner aus mindenstens einem Bestandteil der Gruppe bestehend aus modifizierter Stärke, Guaran, Johannisbrotmehl, Tarakernmehl, Xanthan, Gellan; Karaya,Alginat, Agar, Carrageen, Gummi arabicum, Pektin, Traganth und Celluloseether, ausgewählt ist, bezogen auf das Gesamtgewicht der Einstreu, wobei die vorstehenden Bestandteile immer jeweils 100 Gew.-% ausmachen, wobei die cellulosehaltige Substanz in Partikelform mit einer Partikelgröße von 0,2 bis 6 mm vorliegt.

Die cellulosehaltige Substanz weist einen Anteil von 10 bis 80 Gew.-%, bevorzugt von 20 bis 70 Gew.-%, besonders bevorzugt von 30 bis 65 Gew.-%, an der Einstreu auf. Ist der Anteil der cellulosehaltigen Substanz geringer als 10 Gew.-%, so kann eine genügende Urinaufnahme der Einstreu nicht gewährleistet werden. Ist der Anteil der cellulosehaltigen Substanz jedoch höher als 80 Gew.-%, so ist die Klumpenbildung nicht ausreichend, wodurch der Urin in die unteren Schichten einsickert und eine ökonomische Nutzung der Einstreu nicht möglich ist.

Die cellulosehaltige Substanz ist mindestens ein Bestandteil der Gruppe, bestehend aus Holzmehl, Kleie, Schälkleie, Getreideschale und Getreidespelz. Bevorzugt wird Kleie als cellulosehaltige Substanz verwendet. Kleie besteht aus Getreideschalen, einer Aleuronschicht und einem Keimling. Anstatt der Kleie oder in Kombination mit dieser kann auch Schälkleie, wie beispielsweise Dinkelschale, eingesetzt werden.

Erfindungsgemäß weisen die Partikel der cellulosehaltigen Substanz eine Größe von 0,2 bis 6 mm, insbesondere bevorzugt eine Größe von 0,3 mm bis 1,5 mm auf. Ist die Größe der Partikel geringer als 0,2 mm, so führt dies zu einer nachteiligen Staubbildung. Partikel, die eine Größe von mehr als 6 mm aufweisen, lassen sich hingegen schwerer verarbeiten und können zudem durch die im Vergleich zu kleineren Partikeln verringerte Oberfläche weniger Feuchtigkeit aufnehmen.

Das Getreidemehl der erfindungsgemäßen Einstreu ist nicht besonders eingeschränkt, insoweit es unbehandeltes Getreidemehl, einschließlich handelsübliches Typenmehl ist. Es kann in Form eines Quellmehls verwendet werden. Quellmehl ist ein extrudiertes Mehl oder auch ein chemisch aufgeschlossenes Mehl. Im Extruder wird ein Wasser-Mehl-Gemisch unter hohem Druck und hoher Temperatur gleichmäßig aus einer formgebenden Öffnung herausgepresst, so dass die Stärke im Quellmehl durch den Extrudierprozess thermisch aufgeschlossen wird. Durch diesen thermischen Aufschluss oder durch entsprechende chemische Stärke-Aufschlussprozesse haben Quellmehle ein höheres Wasserbindungsvermögen als unbehandelte Mehle. Das Quellmehl kann aus mindestens einem Getreidemehl hergestellt werden.

Das Getreide kann dabei ein glutenfreies Getreide oder ein glutenhaltiges Getreide sein. Beispielsweise ist das glutenfreie Getreidemehl mindestens ein Mehl eines Bestandteils der Gruppe, bestehend aus Mais, Reis und Hirse.

Das glutenhaltige Getreidemehl kann mindestens ein Mehl eines Bestandteils der Gruppe, bestehend aus Weizen, Dinkel, Roggen, Gerste oder Triticale, sein. Bevorzugt ist die Verwendung von Roggenmehl und/oder Weizenmehl, wobei letzteres besonders bevorzugt durch Proteinverschiebung angereichertes Protein aufweist. Die Verwendung dieser glutenhaltigen Getreide ist vorteilhaft, da das Gluten im Getreidemehl die cellulosehaltige Substanz luftundurchlässig verschließen kann, wodurch geruchsbindende Zusätze nicht nötig sind. Dieser Umstand ist darauf zurückzuführen, dass Gluten den unerwünschten Geruch in der von Tierurin durchnässten cellulosehaltigen Substanz durch die Ausbildung einer dreidimensionalen Struktur festhält und diesen nicht in die Umgebungsluft entweichen lässt. Die Geruchsbindung kann aber auch durch Pentosane (Schleimstoffe) ermöglicht werden, wie dies beispielsweise für Roggen der Fall ist. Roggen gehört zwar auch zu den glutenhaltigen Getreiden, jedoch überwiegt die Geruchsbindung durch Pentosane.

Wird die Geruchsbindung nicht durch Gluten oder Pentosane erreicht, so kann diese durch quellende Stärke gewährleistet werden. Dies trifft insbesondere für glutenfreies Getreidemehl zu.

Das Getreidemehl weist einen Anteil von 10 bis 70 Gew.-%, bevorzugt von 20 bis 65 Gew.-%, besonders bevorzugt von 30 bis 60 Gew.-%, an der Einstreu auf. Die einzusetzende Menge hängt davon ab, wie ausgeprägt der Geruchsbindeeffekt und der Klumpenbildungseffekt in der Einstreu sein soll. Je mehr Getreidemehl in der Einstreu enthalten ist, desto besser lassen sich die urinbenetzten oberen Anteile als platten- oder schollenförmige Klumpen entfernen und umso besser ist das Geruchsbindevermögen. Die Grenze ergibt sich durch die gewünschte Qualität und den gewünschten Preis der Einstreu. Ist der Anteil von Getreidemehl geringer als 10 Gew.-%, so ist das Geruchsbindevermögen nicht ausreichend. Überschreitet hingegen das Getreidemehl einen Anteil von 70 Gew.-%, so kann eine genügende Urinaufnahme der Einstreu nicht gewährleistet werden. Zudem begünstigt ein Getreidemehlanteil von 70 Gew.-% oder mehr eine nachteilige Teigbildung der Klumpen, wodurch die Tiere Teigreste im Fell aufweisen können.

Der Gelbildner weist einen Anteil von 0,1 bis 4 Gew.-%, bevorzugt von 0,5 bis 3,5 Gew.-%, besonders bevorzugt von 1 bis 3 Gew.-%, noch mehr bevorzugt von 1,5 bis 2,5 Gew.-%, an der Einstreu auf. Überraschenderweise verbessern schon kleine Mengen von 0,1 Gew.-% Gelbildner deutlich die Eigenschaften einer Einstreu, die als weitere Bestandteile nur die cellulosehaltige Substanz und Getreidemehl enthält.

Getreidemehl im Sinne der vorliegenden Erfindung als unbehandeltes Getreidemehl ist kein Gelbildner im Rahmen der vorliegenden Erfindung. Um aus Getreidemehl einen Gelbildner zu machen, bedarf es eines erheblichen Prozessaufwands. Insofern beinhaltet der Gelbildneranteil von 0,1 bis 4 Gew.-% nicht das in der erfindungsgemäßen Einstreu zwingend vorgesehene Getreidemehl.

Durch die Kombination aus cellulosehaltiger Substanz, Getreidemehl und Gelbildnern wird die Klumpenfestigkeit, die Feuchtigkeitsbindung, die Geruchsverminderung, die Schmierfilmbildung (d.h. das Absickern der Flüssigkeit auf den Boden des mit Einstreu gefüllten Behälters) und die Ergiebigkeit der Einstreu verbessert. Allerdings begünstigt ein Anteil von mehr als 4 Gew.-% Gelbildner in der Einstreu die Klebrigkeit der Einstreu an Tierhaaren.

Im Rahmen der vorliegenden Erfindung ist der Gelbildner aus mindestens einem Bestandteil der Gruppe, bestehend aus modifizierter Stärke, Guaran, Johannisbrotmehl, Tarakernmehl, Xanthan, Gellan, Karaya, Alginat, Agar, Carrageen, Gummi arabicum, Pektin, Traganth und Celluloseether, ausgewählt. Durch die Verwendung von Gelbildnern kann die Klumpenbildung verbessert und die Feuchtigkeitsaufnahme erhöht werden. Besonders bevorzugt ist Johannisbrotmehl.

In einer bevorzugten Ausführungsform besteht die Einstreu aus 51 bis 65 Gew.-% cellulosehaltiger Substanz, insbesondere Kleie, 31 bis 45 Gew.-% Getreidemehl und 0,1 bis 4 Gew.-%, insbesondere 1 bis 3 Gew.-%, Johannisbrotmehl.

Gemäß einer weiteren Ausführungsform liegt die Einstreu als gepresstes Granulat vor. Bevorzugt ist das gepresste Granulat praktisch abriebfrei. Der hier verwendete Begriff "abriebfrei" bedeutet, dass sich von dem gebildeten Granulat möglichst keine Teilchen lösen, so dass Staubbildung unterdrückt werden kann. Gepresstes, abriebfreies Granulat ist vorteilhaft, da die Einstreu nicht am Fell des Tieres hängenbleibt und in den Wohnraum des Tierhalters herumgetragen wird, wie es für eine pulverförmige Einstreu der Fall wäre. Das gepresste, abriebfreie Granulat kann mit Hilfe der im Stand der Technik verwendeten Verfahren, wie beispielsweise in DE 37 32 807 A1 beschrieben, erhalten werden.

Bevorzugt besteht das Granulat aus Granulatteilchen, von denen mindestens 90%, besonders bevorzugt mindestens 95%, eine Größe von 2 bis 6 mm, besonders bevorzugt von 3 bis 5 mm, aufweisen und ein Verhältnis zwischen größtem und kleinstem Granulatteilchen weniger als 5:1, bevorzugt weniger als 4:1, beträgt. Die zuvor beschriebene Beschaffenheit der Granulatteilchen verhindert das Umherschleppen der Granulatteilchen durch das Tier.

Die Ausgangsmasse der Einstreu, bestehend aus 10 bis 80 Gew.-% cellulosehaltiger Substanz, 10 bis 70 Gew.-% Getreidemehl und 0,1 bis 4 Gew.-% Gelbildner, kann beispielsweise zu Formkörpern verpresst, z.B. stranggepresst werden, die unmittelbar verwendet werden können, wenn es sich z.B. um kleine Pellets mit 5 bis 8 mm Durchmesser und etwa 10 bis 15 mm Länge handelt, die nach dem Pressvorgang durch mechanische Bearbeitung, wie Schneiden, Zerschlagen oder Zerdrücken, zu den Granulatteilchen zerkleinert werden. An die Zerkleinerung schließt sich eine Sichtung an, die bei der Zerkleinerung entstandene, zu kleine und leichte Bestandteile aus dem Granulat aussortieren soll.

Gemäß einer weiteren Ausführungsform beträgt die Schüttdichte der Einstreu 200 bis 800 g/l, bevorzugt 250 bis 750 g/l und besonders bevorzugt 450 bis 550 g/l.

Die erfindungsgemäße Einstreu zur Nutzung in der Tierhaltung ist vorteilhaft, da sie natürlich abbaubar ist, aus nachwachsenden Rohstoffen besteht, Klumpenbildung mit hoher Klumpenfestigkeit ermöglicht und eine geringe Verklebung an Tierhaaren verursacht.

### Methoden

### Schüttdichte

Die Schüttdichte wird nach EN ISO 60 (DIN 53468) bestimmt. Dazu wird die Einstreu in einen Messzylinder von einem Liter Volumen gefüllt. Die Berechnung der Schüttdichte erfolgt aus dem Quotienten aus Masse und Volumen.

### Ergiebigkeit

Sechs Liter der Einstreu werden in einer Höhe von acht Zentimeter (cm) in einen Behälter gefüllt. In diesem Behälter wird an fünf Stellen aus einer Bürette in einem schwachen Strahl 50 Milliliter (ml) demineralisiertes Wasser auf die Einstreu aufgetragen. Nach 30 Minuten (min) wird mithilfe eines Sieblöffels die geklumpte Einstreu entnommen und deren Masse bestimmt. Davon wird die Masse des aufgetragenen Wassers (250 ml) abgezogen und mithilfe der Schüttdichte das geklumpte Volumen berechnet. Dabei gilt: Je kleiner der Wert des Volumens, desto ergiebiger ist die Einstreu.

### Wasserabsorption

Eine 200 ml Volumen entsprechende Masse der Einstreu wird in ein feuchtes, abgetropftes Sieb mit einer Maschenweite von 250 Mikrometer (60 mesh) eingewogen und in eine Wanne mit demineralisiertem Wasser gestellt, so dass die gesamte Einstreu bedeckt ist. Nach 20 min wird das Sieb entnommen und nach einer Abtropfzeit von 20 min gewogen. Die Wasserabsorption wird durch Differenzwägung der Einstreu vor und nach diesem Versuch berechnet. Dabei gilt: Je höher der Wert der Differenz, desto höher ist die Wasserabsorption.

### Schmierfilmbildung

Repräsentative Proben der Einstreu werden in zylindrischen Bechern mit 600 ml Volumen in einer Höhe von 7 cm gefüllt. Das entspricht einem Schüttvolumen von 450 ml. Aus einer Höhe von 10 cm wird aus einer 50-ml-Bürette (ggf. mit mehrmaligem Nachfüllen) ein schwacher Strahl demineralisiertes Wasser so lange auf die Mitte des Produktbetts (Einstreu) gegeben, bis Wasser auf dem Boden des Gefäßes erscheint (Schmierfilmbildung). Das Wasservolumen bis zum Durchschlag wird erfasst. Dabei gilt: Je höher das bis zum Durchschlag verwendete Wasservolumen, desto geringer ist die Neigung zur Schmierfilmbildung.

### Klumpenbildung

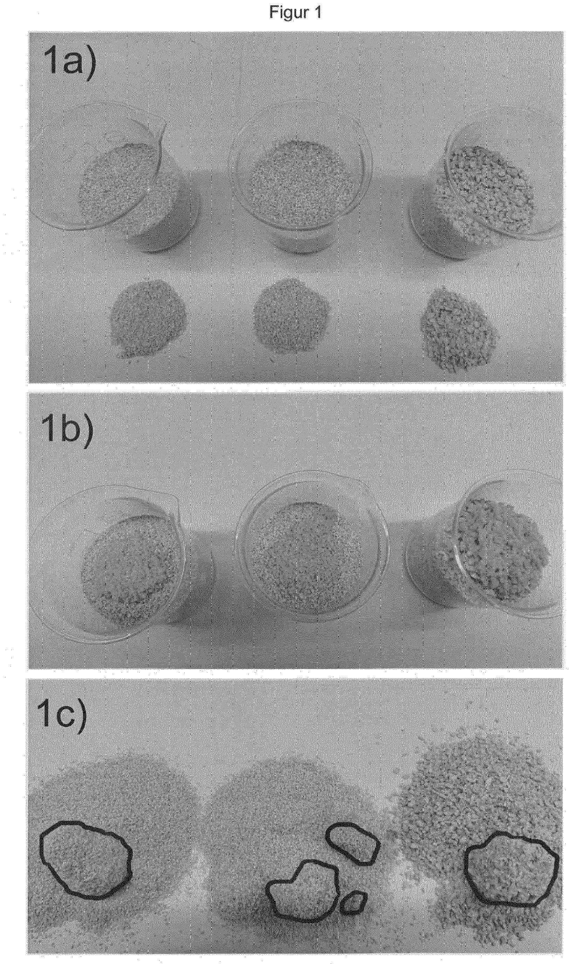

Die Methode zur Bestimmung der Klumpenbildung der Einstreu ist in Figur 1 gezeigt. 300 - 400 Milliliter (ml) Einstreu wird in ein 500 Milliliter (ml) Becherglas gegeben (Figur 1a)) und 20 Milliliter (ml) demineralisiertes Wasser mittels einer Pipette wird auf die Einstreu gegeben, so dass die Einstreu im Becherglas verklumpt (Figur 1b)). Die geklumpte Einstreu wird durch Ausschütten der Einstreu aus dem Becherglas erhalten (Figur 1c)). Dabei gilt: Je fester und kleiner der Klumpen, desto besser die Qualität der Einstreu.

### Klumpenfestigkeit

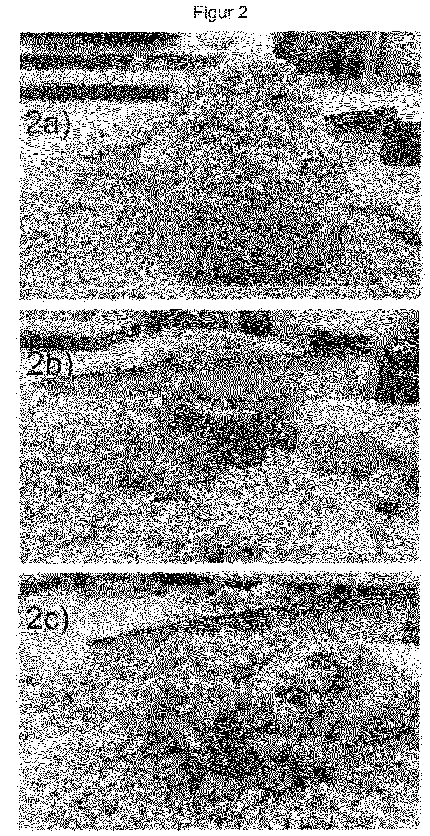

Ein Klumpen mit einer Höhe von etwa 5 bis 6 cm der Ergiebigkeitsprobe (s.o.) wird mit Längsachse nach oben auf eine Metallplatte gegeben. Nun wird ein breites Messer mit einer Schneidengegenseite von 3 mm so lange mit der Schneidengegenseite gegen den Klumpen gedrückt bis dieser zerbricht. Nach dem Zerbrechen des Klumpens wird die Eindringtiefe der Schneidengegenseite in den Klumpen bestimmt. Dabei wird der Abstand vom ersten Berührungspunkt von Messer und Klumpen vorm Zerbrechen bis zur Eindringtiefe des Messers zum Zeitpunkt des Zerbrechens (siehe Figur 2) mit einer Hilfsvorrichtung gemessen. Dieser Abstand in mm (mathematisch auf- oder abgerundet) ergibt die Klumpenfestigkeit. Dabei gilt: Je größer der Abstand, desto höher ist die Klumpenfestigkeit.

### Klebrgkeit

Sechs Liter der Einstreu werden in einer Höhe von acht Zentimeter (cm) in einen Behälter gefüllt. In diesem Behälter wird an fünf Stellen aus einer Bürette in einem schwachen Strahl 50 Milliliter (ml) demineralisiertes Wasser auf die Einstreu aufgetragen. Nach 30 Minuten (min) wird mithilfe eines Sieblöffels die geklumpte Einstreu entnommen und deren Klebrigkeit anhand einer Notenskala von 1 bis 6 subjektiv beurteilt. Starke Klebrigkeit wird mit der Note 6 (= sehr schlecht) und geringe Klebrigkeit mit der Note 1 (= sehr gut) bewertet. Dabei wird der Durchschnitt aus den Bewertungen von vier Personen gebildet.

Die Figuren zeigen:
Figur 1 zeigt einen Versuch zur Klumpenbildung der Einstreu; in Figuren 1a) bis 1c): links: Beispiel 3, Mitte: Vergleichsbeispiel 1, rechts: Referenzbeispiel 1; Figur 1a) Einstreu vorm Versuch; Figur 1b) Einstreu nach Wasserzugabe; Figur 1c) Aufsicht auf geklumpte Einstreu mit eingezeichneter Umrandung der geklumpten Einstreu.
Figur 2 zeigt die Eindringtiefe einer Messerschneidengegenseite in die geklumpte Einstreu; Figur 2a) Beispiel 3; Figur 2b) Vergleichsbeispiel 1; Figur 2c) Referenzbeispiel 1.

Die nachstehenden Beispiele dienen als weitere Erläuterungen der vorliegenden Erfindung, ohne darauf beschränkt zu sein.

### Beispiel 1

Ein Gemisch aus 49,8 Gew.-% Holzmehl, 10 Gew.-% Weizenkleie, 20 Gew.-% Weizenmehl, 20 Gew.-% Roggenmehl und 0,2 Gew.-% Guargum wurde mittels einer Pellet-Presse (der Firma Salmatec) zu Pellets kompaktiert, die anschließend mittels eines Granulierschredders (der Firma Pallmann) zerkleinert wurden. Die Einstreu wurde durch Sieben als Fraktion mit einer Größe von 2 bis 4 mm erhalten und anschließend entstaubt.

### Beispiel 2

Die Einstreu des Beispiels 2 wurde wie die Einstreu des Beispiels 1 hergestellt, nur dass das Mischungsverhältnis der Bestandteile folgendermaßen geändert wurde: 49 Gew.-% Holzmehl, 10 Gew.-% Weizenkleie, 20 Gew.-% Weizenmehl, 20 Gew.-% Roggenmehl und 1 Gew.-% Guargum.

### Beispiel 3

Die Einstreu des Beispiels 3 wurde wie die Einstreu des Beispiels 1 hergestellt, nur dass das Mischungsverhältnis der Bestandteile folgendermaßen geändert wurde: 48 Gew.-% Holzmehl, 10 Gew.-% Weizenkleie, 20 Gew.-% Weizenmehl, 20 Gew.-% Roggenmehl und 2 Gew.-% Guargum.

### Beispiel 4

Die Einstreu des Beispiels 4 wurde wie die Einstreu des Beispiels 1 hergestellt, nur dass das Mischungsverhältnis der Bestandteile folgendermaßen geändert wurde: 46 Gew.-% Holzmehl, 10 Gew.-% Weizenkleie, 20 Gew.-% Weizenmehl, 20 Gew.-% Roggenmehl und 4 Gew.-% Guargum.

### Vergleichsbeispiel 1

Die Einstreu des Vergleichsbeispiels 1 wurde wie die Einstreu des Beispiels 1 hergestellt, nur dass das Mischungsverhältnis der Bestandteile folgendermaßen geändert wurde: 50 Gew.-% Holzmehl, 10 Gew.-% Weizenkleie, 20 Gew.-% Weizenmehl und 20 Gew.-% Roggenmehl.

### Vergleichsbeispiel 2

Die Einstreu des Vergleichsbeispiels 2 wurde wie die Einstreu des Beispiels 1 hergestellt, nur dass das Mischungsverhältnis der Bestandteile folgendermaßen geändert wurde: 44 Gew.-% Holzmehl, 10 Gew.-% Weizenkleie, 20 Gew.-% Weizenmehl, 20 Gew.-% Roggenmehl und 6 Gew.-% Guargum.

### Referenzbeispiel 1

Als Referenzbeispiel wurde die Einstreu "CAT'S BEST ÖkoPlus" von JRS verwendet.

**Tabelle 1**

| **Einstreu** | **Holzmehl/ Kleie (Gew.-%)** | **Getreidemehl (Gew.-%)** | **Gelbildner (Gew.-%)** |
|---|---|---|---|
| **Beispiel 1** | 59,9 | 39,9 | 0,2 |
| **Beispiel 2** | 59,5 | 39,5 | 1 |
| **Beispiel 3** | 59 | 39 | 2 |
| **Beispiel 4** | 58 | 38 | 4 |
| **Vergleichsbeispiel 1** | 60 | 40 | --- |
| **Vergleichsbeispiel 2** | 57 | 37 | 6 |
| **Referenzbeispiel 1** | 88 | --- | 12 |

**Tabelle 2**

| **Einstreu** | **Schüttdichte (g/l)** | **Wasserabsorption (%)** | **Ergiebigkeit (ml)** |
|---|---|---|---|
| **Beispiel 1** | 532 | 345 | 382 |
| **Beispiel 2** | 499 | 432 | 328 |
| **Beispiel 3** | 522 | 540 | 291 |
| **Beispiel 4** | 512 | 690 | 261 |
| **Vergleichsbeispiel 1** | 505 | 330 | 392 |
| **Vergleichsbeispiel 2** | 523 | 815 | 240 |
| **Referenzbeispiel 1** | 557 | 880 | 388 |

**Tabelle 3**

| **Einstreu** | **Schmierfilmbildung (ml)** | **Klumpenfestigkeit (mm)** | **Klebrigkeit (Note)** |
|---|---|---|---|
| **Beispiel 1** | 140 | 8 | 1 |
| **Beispiel 2** | 220 | 18 | 2 |
| **Beispiel 3** | > 300 | 25 | 2 |
| **Beispiel 4** | > 300 | 26 | 3 |
| **Vergleichsbeispiel 1** | 120 | 5 | 1 |
| **Vergleichsbeispiel 2** | > 300 | 28 | 4 |
| **Referenzbeispiel 1** | 18 | 9 | 3 |

Tabelle 2 und 3 verdeutlichen die vorteilhaften Eigenschaften der erfindungsgemäßen Einstreu. Beispiele 1 bis 4 zeigen eine vorteilhafte Ergiebigkeit und Schmierfilmbildung, eine erhöhte Klumpenfestigkeit bei einer geringen Klebrigkeit. Das Vergleichsbeispiel 2 besteht zwar aus einer Kombination von Holzmehl/Kleie, Getreidemehl und Gelbildner, zeigt jedoch eine nachteilige stärkere Klebrigkeit, die auf den im Vergleich zur erfindungsgemäßen Einstreu erhöhten Gelbildneranteil zurückzuführen ist. Auch das Referenzbeispiel 1 weist eine höhere Klebrigkeit als die Beispiele 1 bis 3 auf. Diese verstärkte Klebrigkeit des Referenzbeispiels 1 wird durch den hohen Gelbildneranteil von 12 Gew.-% verursacht. Durch die Zugabe von Getreidemehl in die Einstreu kann die Klebrigkeit vermindert werden, wie insbesondere für Beispiele 1 bis 3 in Tabelle 3 gezeigt. Des Weiteren kann in der Einstreu des Referenzbeispiels 1 aufgrund des hohen Gelbildneranteils von 12 Gew.-% nur grobkörniges Holzmehlgranulat verwendet werden. Dies hat zur Folge, dass geklumpte Einstreu nur schwer durch Sieben aus dem Behälter entfernt werden kann.

Figur 1 zeigt die vorteilhafte Klumpenbildungseigenschaft der erfindungsgemäßen Einstreu (Beispiel 3, Figur 1: links) im Vergleich zum Vergleichsbeispiel 1 (Figur 1: Mitte) und zum Referenzbeispiel 1 (Figur 1: rechts). Die erfindungsgemäße Einstreu bildete in diesem Versuch einen kompakten, festen Klumpen, während die Einstreu des Vergleichsbeispiels 1 drei Klumpen bildete und somit nachteilig hinsichtlich der Klumpenbildung zu beurteilen ist. Die geklumpte Einstreu des Referenzbeispiels 1 war im Vergleich zur geklumpten Einstreu des Beispiels 3 weniger kompakt und weniger fest. Dadurch kann der Klumpen des Referenzbeispiels 1 beim Entfernen des Klumpens aus der benutzten Einstreu sehr leicht zerfallen, und die leicht abfallenden Granulatreste können die übrige Einstreu, die keine Flüssigkeit aufgenommen hat, verunreinigen, so dass die verbleibende Einstreu schneller riecht und früher gewechselt werden muss.

Die geringe Klumpenfestigkeit des Vergleichsbeispiels 1 und des Referenzbeispiels 1 im Vergleich zur erfindungsgemäßen Einstreu des Beispiels 3 zeigt Figur 2. Beispiel 3 (Figur 2a)) zeigt eine deutlich größere Eindringtiefe der Schneidengegenseite in die geklumpte Einstreu im Vergleich zum Vergleichsbeispiel 1 (Figur 2b)) und Referenzbeispiel 1 (Figur 2c)) und besitzt somit eine höhere Klumpenfestigkeit als die Einstreu aus Vergleichsbeispiel 1 und Referenzbeispiel 1. Die Klumpenfestigkeit der Einstreu des Vergleichsbeispiels 1 war derartig gering, dass der Klumpen in zwei Teile zerfiel. Die verbesserte Klumpenfestigkeit der Einstreu des Beispiels 3 im Vergleich zur Einstreu des Vergleichsbeispiels 1 und Referenzbeispiels 1 ist darauf zurückzuführen, dass nur die Einstreu des Beispiels 3 die vorteilhafte Kombination von Getreidemehl und Gelbildner enthielt.

Figur 2a) verdeutlicht auch die zuvor erwähnte Kompaktheit des Klumpens des Beispiels 3. Die grobkörnige Struktur der geklumpten Einstreu des Referenzbeispiels 1 zeigt sich hingegen in Figur 2c). Die Teilchen dieses grobkörnigen Klumpens können sich leicht von diesem lösen und somit die übrige Einstreu, die noch keine Flüssigkeit aufgenommen hat, verschmutzen, so dass die Einstreu schneller riecht und entsprechend schneller ausgetauscht werden muss.

## Patentansprüche

1. Einstreu zur Nutzung in der Tierhaltung, bestehend aus 10 bis 80 Gew.-% cellulosehaltiger Substanz, die aus mindestens einem Bestandteil der Gruppe, bestehend aus Holzmehl, Kleie, Schälkleie, Getreideschale und Getreidespelz, ausgewählt ist, 10 bis 70 Gew.-% Getreidemehl und 0,1 bis 4 Gew.-% Gelbildner, wobei der Gelbildner aus mindestens einem Bestandteil der Gruppe, bestehend aus modifizierter Stärke, Guaran, Johannisbrotmehl, Tarakernmehl, Xanthan, Gellan, Karaya, Alginat, Agar, Carrageen, Gummi arabicum, Pektin, Traganth und Celluloseether, ausgewählt ist, bezogen auf das Gesamtgewicht der Einstreu, wobei die vorstehenden Bestandteile immer jeweils 100 Gew.-% ausmachen,
wobei die cellulosehaltige Substanz in Partikelform mit einer Partikelgröße von 0,2 bis 6 mm vorliegt.

2. Einstreu nach Anspruch 1, wobei die cellulosehaltige Substanz Kleie ist.

3. Einstreu nach Anspruch 1 oder 2, wobei der Gelbildner Johannisbrotmehl ist.

4. Einstreu nach einem der Ansprüche 1 bis 3, wobei das Getreidemehl mindestens ein Mehl eines Bestandteils der Gruppe, bestehend aus Weizen, Dinkel, Roggen, Gersten oder Triticale, ist.

5. Einstreu nach einem der Ansprüche 1 bis 4, bestehend aus 51 bis 65 Gew.-% Kleie, 31 bis 45 Gew.-% Getreidemehl und 0,1 bis 4 Gew.-% Johannisbrotmehl.

6. Einstreu nach einem der Ansprüche 1 bis 5, wobei das Getreidemehl ein Quellmehl eines Getreides ist.

7. Einstreu nach einem der Ansprüche 1 bis 6, wobei die Einstreu als gepresstes Granulat vorliegt.

8. Einstreu nach einem der Ansprüche 1 bis 7, wobei die Schüttdichte der Einstreu 200 bis 800 g/l beträgt.

## Claims

1. Litter for use in animal keeping, consisting of 10 to 80% by weight of cellulosic substance which is selected from at least one component of the group consisting of wood meal, bran, hulls and bran, cereal hull and cereal husk, 10 to 70% by weight of cereal flour and 0.1 to 4% by weight of gel former, wherein the gel former is selected from at least one component of the group consisting of modified starch, guaran, carob gum, tara gum, xanthan gum, gellan gum, gum karaya, alginate, agar, carrageenan, gum arabic, pectin, tragacanth and cellulose ether, based on the total weight of the litter, where the above components always amount to 100% by weight,
where the cellulosic substance is present in the form of particles with a particle size of from 0.2 to 6 mm.

2. Litter according to Claim 1, wherein the cellulosic substance is bran.

3. Litter according to claim 1 or 2, wherein the gel former is carob gum.

4. Litter according to one of claims 1 to 3, wherein the cereal flour is at least one flour of a component of the group consisting of wheat, spelt, rye, barleys or triticale.

5. Litter according to one of claims 1 to 4, consisting of 51 to 65% by weight of bran, 31 to 45% by weight of cereal flour and 0.1 to 4% by weight of carob gum.

6. Litter according to one of claims 1 to 5, wherein the cereal flour is a pre-gelatinized flour of a cereal.

7. Litter according to one of claims 1 to 6, wherein the litter is present as compressed granules.

8. Litter according to one of claims 1 to 7, wherein the bulk density of the litter amounts to 200 to 800 g/l.

## Revendications

1. Litière destinée à être utilisée dans l'élevage d'animaux, constituée de 10 à 80 % en poids d'une substance contenant de la cellulose, choisie parmi le groupe constitué par la farine de bois, le son, le remoulage, les enveloppes de grains et la glume de céréales, 10 à 70 % en poids de farine de céréales et 0,1 à 4 % en poids d'un agent gélifiant, ledit agent gélifiant étant constitué par au moins un composant du groupe constitué par l'amidon modifié, la gomme de guar, la gomme de caroube, la gomme de tara, la gomme xanthane, la gomme gellane, la gomme karaya, l'alginate, l'agar-agar, le carraghénane, la gomme arabique, la pectine, la gomme aragante et les éthers de cellulose, par rapport au poids total de la litière, les composants susmentionnés s'additionnant toujours pour former 100% en poids,
la substance contenant de la cellulose se présentant sous forme particulaire ayant une dimensions de particules de 0,2 à 6 mm.

2. Litière selon la revendication 1 dans laquelle la substance contenant de la cellulose est le son.

3. Litière selon la revendication 1 ou 2 dans laquelle l'agent gélifiant est la gomme de caroube.

4. Litière selon l'une des revendications 1 à 3 dans laquelle la farine de céréale est au moins une farine d'un composant du groupe constitué par le blé, l'épeautre, le seigle, l'orge ou le triticale.

5. Litière selon l'une des revendications 1 à 4 constituée par 51 à 65 % en poids de son, 31 à 45 % en poids de farine de blé et 0,1 à 4 % en poids de gomme de caroube.

6. Litière selon l'une des revendications 1 à 5 dans laquelle la farine de blé est une farine prégélatinisée d'une céréale.

7. Litière selon l'une des revendications 1 à 6 sous forme de granulés compactés.

8. Litière selon l'une des revendications 1 à 7 dont la densité apparente est de 200 à 800 g/l.
